# EUROPÄISCHE PATENTSCHRIFT

(11) **EP 0 394 540 B1**
(45) Veröffentlichungstag und Bekanntmachung des Hinweises auf die Patenterteilung: **23.06.1993**
(21) Anmeldenummer: 89107817.2
(22) Anmeldetag: 28.04.1989
(51) Int. Cl.: G01L 23/10

(54) **Halterung für das piezoelektrische Röhrchen eines Drucksensors**
Holding support for the piezoelectric tube of a pressure sensor
Support d'attache pour tube piézoélectrique d'un capteur de pression

(43) Veröffentlichungstag der Anmeldung: 31.10.1990
(73) Patentinhaber: SIEMENS AKTIENGESELLSCHAFT, 80333 München (DE)
(72) Erfinder: Meixner, Hans, Dr., D-8013 Haar (DE); Mock, Randolf, Dr., D-8000 München 70 (DE); Winter, Hans, Dr., D-8011 Höhenkirchen (DE)

(56) Entgegenhaltungen:
- DE-A- 3 727 221
- FR-A- 1 031 155

## Beschreibung

Die vorliegende Erfindung bezieht sich auf eine Verbesserung an einem Drucksensor, der zur Messung des augenblicklichen Verbrennungsdruckes im Zylinder einer Kolben-Verbrennungsmaschine zu verwenden ist. Bekannt sind Ausführungen eines solchen Drucksensors mit einem Röhrchen als Sensorelement. Einzelheiten eines solchen Drucksensors sind in der FR-A-10 31 155 und der DE-A-37 27 221 beschrieben. Für den Drucksensor der letztgenannten Druckschrift ist ein Röhrchen aus Piezokeramik vorgesehen, das mit seiner einen Stirnseite direkt oder über ein Zwischenteil indirekt an einer stirnseitigen Membran 5 des Drucksensors anliegt. Die eine Seite der Membran begrenzt den Verbrennungsraum. Der im Verbrennungsraum herrschende Verbrennungsdruck 6 wird über die Membran 5 auf das piezokeramische Röhrchen 2 übertragen, dessen anderes Ende an einem festen Widerlager befestigt ist. Entsprechend der nicht vorveröffentlichten älteren Patentanmeldung (Drucksensor März 89) ist vorgesehen, daß das piezokeramische Röhrchen auch unabhängig von jeglichen im Betrieb auftretenden Temperaturen des Drucksensors ständig unter Druck der mechanisch vorgespannten Membran steht. Dies einerseits, daß man damit sich genügend weit aus dem Rauschpegel heraushebende elektrische Sensorsignale erhalten kann. Ein anderer Zweck ist sicherzustellen, daß das piezokeramische Röhrchen definiert zwischen dem Widerlager und der Membran gehalten ist.

Aufgabe der vorliegenden Erfindung ist es, Maßnahmen anzugeben, mit denen auch ohne Einhaltung anderer Bedingungen das das Sensorelement bildende Röhrchen des Drucksensors sicher gehaltert ist.

Diese Aufgabe wird mit den Merkmalen des Patentanspruches 1 gelöst. Weitere Ausgestaltungen und Weiterbildungen der Erfindung gehen aus den abhängigen Ansprüchen hervor.

An sich scheint es einfach, das piezokeramische Röhrchen in dem Drucksensor gegen Verlagerung und dgl. zu haltern. Aus verschiedenen Gründen ist dies aber nicht der Fall.

Man hat auch zum Beispiel eine Lötverbindung als mechanische Befestigung des piezokeramischen Röhrchens an einer Messinghalterung des Drucksensors vorgesehen. Nicht nur den auftretenden hohen Temperaturen, sondern auch der starken mechanischen Wechselbelastung muß eine derartige Lötung standhalten. Es ist aber festgestellt worden, daß die Wechsellastbeständigkeit einer Lötung bei erhöhten Temperaturen deutlich abnimmt und sich die Lötverbindung im Laufe des Betriebs löst. Das Ergebnis ist also, daß diese an sich plausibel erscheinende technische Lösung zumindest auf die Dauer doch nicht funktionsfähig ist.

Die erfindungsgemäße Lösung besteht darin, für die Halterung des piezokeramischen Röhrchens eine Klemmhalterung vorzusehen, die sich am Widerlager befindet bzw. Teil desselben ist. Für die Montage des keramischen Röhrchens wird diese erfindungsgemäß vorgesehene Klemmhalterung mit Hilfe einer dazu angepaßten Vorrichtung gespreizt, bis das Röhrchen in dieser Klemmhalterung in vorgegeben definierter Lage zuverlässig positioniert ist. Dann läßt man die elastisch federnde Klemmwirkung der Halterung eintreten, die das piezokeramische Röhrchen in allen Betriebszuständen des Drucksensors zuverlässig haltert. Es ist wichtig darauf zu achten, daß die erfindungsgemäße Klemmhalterung so ausgebildet ist, daß ihre Klemmbacken gleichmäßig an der Keramik anliegen. Nur punktuelle klemmende Druckbelastung auf der Wandung des piezokeramischen Röhrchens könnte dazu führen, daß zumindest nach einiger Betriebszeit die mechanische Festigkeit des Röhrchens nicht mehr ausreichen könnte, d.h. das Röhrchen z.B. bricht.

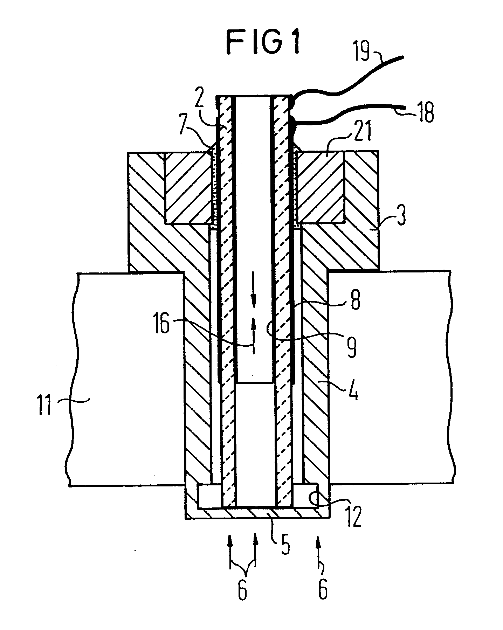

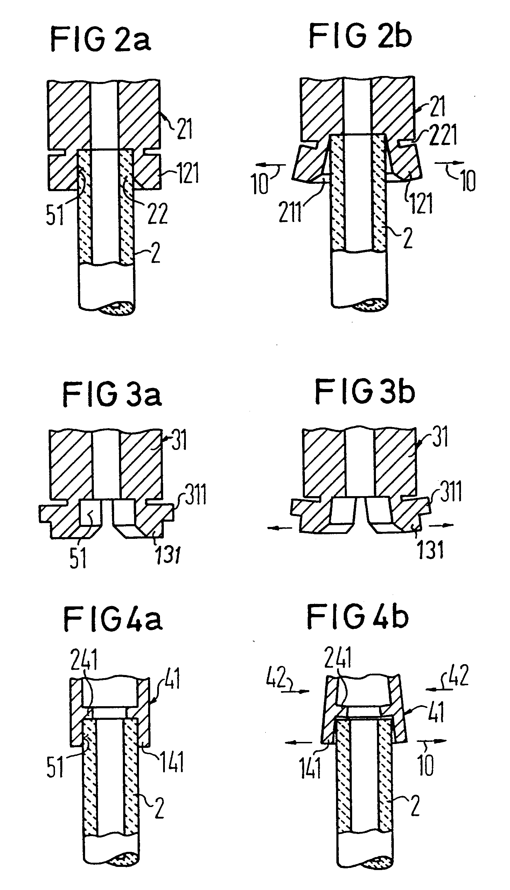

Zur weiteren Erläuterung dienen die Figuren 1 bis 4, von denen die Figur 1 aus der obengenannten DE-OS einen Drucksensor mit piezokeramischem Röhrchen 2 zeigt. Die Einzelheiten dieser Figur sind aus der zugehörigen Druckschrift bekannt. Die Figuren 2 bis 4 zeigen Einzelheiten zur Erfindung. Mit 21 ist die Halterung bezeichnet, in die bei der bekannten Ausführungsform das piezoelektrische Röhrchen 2 eingelötet oder eingeklebt ist.

Figur 2a zeigt den der Halterung 21 zugewandten Teil 22 des piezokeramischen Röhrchens 2. Dieser Teil des Röhrchens 2 ist wie aus Figur 2a ersichtlich in der Halterung 21 eingeklemmt. Die Figur 2b zeigt die Halterung 21 in demjenigen Zustand, in dem das die eigentliche Klemmhalterung bildende Teilstück 121 der Halterung 21 zum Einsetzen des Röhrchens 2 aufgespreizt ist. Die mit dem Bezugszeichen 10 bezeichneten Pfeile deuten auf diese Spreizung hin. Die vorgesehenen Einkerbungen 221 der Halterung dienen dazu, diese Halterung, wie erfindungsgemäß vorgesehen, zu spreizen. Die entsprechend der Fase 211 vorgesehene Abschrägung 211 der inneren Vorderkante des eigentlichen Klemmteils 121 dient nicht nur zum leichteren Einsetzen des Röhrchens, sondern an dieser Abschrägung kann auch das Spreizwerkzeug angesetzt werden.

Figur 3a zeigt eine variierte Ausführungsform zur Figur 2. Diese Variation besteht darin, daß das eigentliche Klemmteil 131 der Halterung zusätzlich mit einem mit diesem Klemmteil einstückig verbundenen ringförmigen Ansatz 311 hat. Dieser ist dazu geeignet, das für das Spreizen vorgesehene Werkzeug anzusetzen. Die Figur 3b zeigt die Halterung 31 dieser Ausführungsvariante in gespreizter Form, jedoch bevor das Röhrchen 2 der Figur 2 eingesetzt ist (wie dies in Figur 2b gezeigt ist).

Die Figur 4a zeigt eine hülsenförmige Variante der Halterung 41, in deren Klemmteil 141 das Keramikröhrchen 2 eingesetzt ist. Mit 241 ist ein, wie aus der Figur 4a ersichtlicher, nach innen vorspringender Ringansatz bezeichnet. Er dient dazu, dem eingesetzten Röhrchen 2 eine zuverlässige Anlage in Axialrichtung zu geben, die das eigentliche Widerlager der Halterung 41 ist. Dieser Ansatz 241 entspricht dem abgesetzten Innendurchmesser der Halterungen der Figuren 2 und 3.

Zum Spreizen des eigentlichen Klemmteils 141 der Halterung nach Figur 4a dient die aus der Figur 4b hervorgehende Maßnahme, die Halterung 41 im Bereich oberhalb des Ansatzes 241 durch, wie mit den Pfeilen 42 angedeutetes, Zusammenpressen derart elastisch zu verformen, daß sich für das eigentliche Klemmteil 141 wieder die mit den Pfeilen 10 angegebene Spreizung der Aufnahmeöffnung der Halterung 41 ergibt. Figur 4b zeigt den Zustand, in dem das Röhrchen 2 bereits eingesetzt, aber noch nicht eingeklemmt ist. Nach Wegnahme des mit 42 angedeuteten Pressens geht die Halterung wieder in die alte Form nach Figur 4a zurück und mit dem eigentlichen Klemmteil 141 dieser Halterung wird das Röhrchen 2 an seinem oberen Ende festgehalten.

Alle Halterungen 21, 31, 41 der Figuren 2 bis 4 haben gemeinsam, daß die mit Klemmwirkung halternde Fläche 51 eine ringförmige Flache ist, die ebenso ringförmig die äußere Mantelfläche des oberen Endes des Röhrchens 2 klemmend umschließt. Es kann keinerlei punktuelle Druckbelastung auf das eingeklemmte Ende des Röhrchens auftreten.

Die vorliegenden Ausführungen sind mit Bezug auf die Verwendung eines Röhrchens 2 als Sensorelement des Drucksensors beschrieben. Prinzipiell läßt sich die Erfindung auch bei einem Vollstab (statt eines solchen Röhrchens) als Sensorelement anwenden.

## Patentansprüche

1. Drucksensor mit einer Halterung zur sicheren mechanischen Befestigung des darin enthaltenen stabförmigen Sensorelements, wobei dieser Drucksensor insbesondere für die Verwendung bei Kolben-Verbrennungsmaschinen vorgesehen ist,
**gekennzeichnet dadurch,**
daß für das Sensorelement (2) eine elastische Klemmhalterung (21, 31, 41) vorgesehen ist, die sich im Bereich des Widerlagers für das Sensorelement im Drucksensor befindet, daß diese Klemmhalterung eine insgesamt ringförmige klemmende Halterungsfläche (51) besitzt,
und dadurch, daß diese Klemmhalterung so ausgebildet ist, daß sie zum Einsetzen des einzuklemmenden Endes des Sensorelements (2) elastisch zu spreizen (10) ist.

2. Drucksensor nach Anspruch 1,
**gekennzeichnet dadurch,**
daß das Sensorelement als piezokeramisches Röhrchen (2) ausgebildet ist.

3. Drucksensor nach Anspruch 1 oder 2,
**gekennzeichnet dadurch,**
daß die Klemmhalterung mehrere elastisch aufzuspreizende Klemmbacken (121) für das einzuklemmende Ende des Sensorelements (2) besitzt.

4. Drucksensor nach Anspruch 1, 2 oder 3,
**gekennzeichnet dadurch,**
daß das aufzuspreizende Teil der Halterung eine Abschrägung (211) der Innenkante der Aufnahmebohrung der Halterung besitzt, wobei an diese Abschrägung das spreizende Werkzeug anzusetzen ist.

5. Drucksensor nach einem der Ansprüche 1 bis 4,
**gekennzeichnet dadurch,**
daß das eigentliche klemmende Teil der Halterung einen ringförmigen Ansatz (311) besitzt, um das zur Spreizung vorgesehene Werkzeug anzusetzen.

6. Drucksensor nach Anspruch 1 oder 2,
**gekennzeichnet dadurch,**
daß das eigentliche Klemmteil eine rohrförmige Aufnahme (41) für das Sensorelement ist und diese rohrförmige Halterung außerhalb des Bereichs der Einklemmung des Sensorelements (2) durch radial gerichtetes Pressen (42) elastisch derart verformt wird, daß sich das zur Aufnahme des Sensorelements vorgesehene rohrförmige Ende (141) der Halterung (41) zum Einsetzen des Sensorelements (2) elastisch aufspreizt.

## Claims

1. Pressure sensor having a holder for the secure mechanical mounting of the rod-shaped sensor element contained therein, this pressure sensor being provided, in particular, for use in piston-type internal combustion engines, characterised in that there is provided for the sensor element (2) an elastic clamping holder (21, 31, 41) which is located in the region of the abutment for the sensor element in the pressure sensor, in that this clamping holder has a clamping holder surface (51) which is annular overall, and in that this clamping holder is constructed such that it is to be elastically spread (10) for inserting the end of the sensor element (2) to be clamped.

2. Pressure sensor according to Claim 1, characterised in that the sensor element is constructed as a piezoceramic tube (2).

3. Pressure sensor according to Claim 1 or 2, characterised in that the clamping holder has a plurality of clamping jaws (121), which are to be elastically spread, for the end of the sensor element (2) to be clamped.

4. Pressure sensor according to Claim 1, 2 or 3, characterised in that the part of the holder which is to be spread has a bevel (211) of the inner edge of the seating bore of the holder, it being the case that the spreading tool is to be applied to this bevel.

5. Pressure sensor according to one of Claims 1 to 4, characterised in that the actual clamping part of the holder has an annular shoulder (311) in order to apply the tool provided for spreading.

6. Pressure sensor according to Claim 1 or 2, characterised in that the actual clamping part is a tubular receptacle (41) for the sensor element, and this tubular holder is deformed elastically outside the region of the clamping of the sensor element (2) by a radially directed pressure (42) in such a way that the tubular end (141) of the holder (41) provided for seating the sensor element spreads elastically for inserting the sensor element (2).

## Revendications

1. Capteur de pression comportant un support pour la fixation mécanique sûre de l'élément-capteur en forme de tige qui y est contenu, ledit capteur de pression étant prévu, en particulier pour sa mise en oeuvre dans une machine à combustion interne à piston, caractérisé par le fait qu'il est prévu, pour l'élément-capteur (2), un support élastique de serrage (21, 31, 41) qui se situe, dans le capteur de pression, dans la zone du contre-appui pour l'élément-capteur, que ledit support de serrage possède une surface de support de serrage (51) de forme générale annulaire, et par le fait que ce support de serrage est réalisé de telle manière que pour l'insertion de l'extrémité de l'élément-capteur (2) qui doit être bloquée par serrage, il est capable d'une expansion élastique (10).

2. Capteur de pression selon la revendication 1, caractérisé par le fait que l'élément-capteur est réalisé sous la forme d'un petit tube piézo-céramique (2).

3. Capteur de pression selon la revendication 1 ou 2, caractérisé par le fait que le support de serrage comporte, pour l'extrémité de l'élément-capteur (2) qui doit être bloquée, plusieurs joues expansibles (121).

4. Capteur de pression selon la revendication 1, 2 ou 3, caractérisé par le fait que la partie expansible du support présente un chanfrein (211) du bord intérieur du perçage de réception du support, ledit chanfrein étant destiné à être attaqué par l'outil servant à l'expansion.

5. Capteur de pression selon l'une des revendications 1 à 4, caractérisé par le fait que l'élément de serrage proprement dit du support possède un appendice de forme annulaire (311) pour l'attaque de l'outil servant à l'expansion.

6. Capteur de pression selon la revendication 1 ou 2, caractérisé par le fait que l'élément de serrage proprement dit est constitué par un élément tubulaire (41) servant à recevoir l'élément-capteur et que ce support tubulaire est déformé élastiquement, à l'extérieur de la zone de serrage de l'élément-capteur (2), par une pression radial, de manière que l'extrémité tubulaire (141) du support (41) qui est destinée à recevoir l'élément-capteur (2), subit une expansion élastique pour la mise en place de l'élément-capteur (2).
